# EUROPÄISCHE PATENTSCHRIFT

(11) **EP 1 615 759 B1**
(45) Veröffentlichungstag und Bekanntmachung des Hinweises auf die Patenterteilung: **31.12.2008**
(21) Anmeldenummer: 04724278.9
(22) Anmeldetag: 30.03.2004
(51) Int. Cl.: B29B 9/06, B01J 2/20, H02K 7/09, H02K 7/08, H02K 41/02, F16C 39/06, B24B 41/04

(54) **ANTRIEBSEINHEIT FÜR EINEN GRANULATOR**
DRIVE UNIT FOR A GRANULATOR
UNITE D'ENTRAINEMENT POUR UN GRANULATEUR

(30) Priorität: 09.04.2003 DE 10316142
(43) Veröffentlichungstag der Anmeldung: 18.01.2006
(73) Patentinhaber: KraussMaffei Berstorff GmbH, 30625 Hannover (DE)
(72) Erfinder: CHSZANIECKI, Gregor, 30625 Hannover (DE); KROLL, Matthias, 35578 Wetzlar (DE)
(74) Vertreter: Maierl, Christine
(86) Internationale Anmeldenummer: PCT/EP2004/003334
(87) Internationale Veröffentlichungsnummer: WO 2004/089588

(56) Entgegenhaltungen:
- DE-A- 10 062 065
- DE-A- 19 715 064
- US-A- 5 027 280
- US-A- 5 573 443
- US-B1- 6 332 765
- OHJI T ET AL: "PERMANENT MAGNET BEARINGS FOR HORIZONTAL- AND VERTICAL-SHAFT MACHINES: A COMPARATIVE STUDY" JOURNAL OF APPLIED PHYSICS, AMERICAN INSTITUTE OF PHYSICS. NEW YORK, US, Bd. 85, Nr. 8, PART 2A, 15. April 1999 (1999-04-15), Seiten 4648-4650, XP000823630 ISSN: 0021-8979

## Beschreibung

Die Erfindung betrifft eine Antriebseinheit für einen Granulator gemäß dem Oberbegriff des Anspruchs 1 sowie einen Granulator gemäß dem Oberbegriff des Anspruchs 14.

Bei einem Granulator wird in einem Extruder aufgeschmolzenes Kunststoff-Ausgangsmaterial in der Regel einer Schneidplatte mit beispielsweise ringförmig angeordneten Düsenbohrungen zugeführt. An dieser Schneidplatte rotiert auf der dem Extruder gegenüberliegenden Seite ein Messerkopf, der die austretenden Kunststoffstränge zerschneidet. Bei einem Unterwassergranulator wird der Prozessraum von Kühlwasser durchströmt, mit dem die hergestellten Granulatkörner zudem abgeführt werden. Das Kühlwasser wird der Schneidkammer bei einem Unterwassergranulator durch eine Rohrleitung zugeführt.

Als allgemeiner Stand der Technik wird auf die DE 101 51 434 A, die DE 199 14 116 A die DE 42 14 481 A und die US-B-6 332 765 verwiesen.

Während des Betriebs eines Granulators ist es notwendig, eine definierte Axialkraft auf das Schneidmesser auszuüben, mit der das Schneidmesser gegen die Schneidplatte gedrückt wird. Unterschreitet diese Axialkraft einen bestimmten Wert, so werden die Kunststoffstränge nicht mehr in gewünschter Weise geschnitten, sondern können sich zwischen Schneidplatte und Schneidmesser hindurchzwängen. Bei zu groß gewählter Axialkraft hingegen, muss ein übermäßiger Messerverschleiß in Kauf genommen werden, was zu längeren Maschinenstillstandzeiten und signifikant erhöhten Kosten führt.

Bei bisherigen Granutatoren ist es auch bekannt, die axiale Anpresskraft der Messer während des Betriebes des Granulators zu verändern, beispielsweise um den Messerverschleiß nach Erreichen eines stationären Betriebszustands zu reduzieren. Auch können die Messer durch gezielte. Erhöhung der Axialkraft in definierten Zeitspannen nachgeschliffen werden.

Insgesamt versucht man bei Granulatoren die Maschinenstillstandszeit zu reduzieren, den Messerverschleiß zu verringern und die Messerstandzeiten zu verlängern.

Als Lösungen für verstellbare Axialkräfte sind pneumatische und hydraulische Stellsysteme bekannt, die Messerwellen beaufschlagen und diese beispielsweise durch Hohlwellenmotoren in Richtung der Schneidplatte vorspannen. Dazu sind, je nach Ausführung bewegliche Lagerungseinheiten notwendig, die axial flexibel an einen Antrieb gekoppelt werden müssen. Diese bekannten Lösungen haben jedoch den Nachteil, dass zusätzliche Maschineneinheften wie Druckluft- oder Hydraulikdruckerzeugungseinheiten erforderlich sind. Mechanische Lösungen mit verstellbaren Federkräften weisen zumeist eine recht hohe Komplexität auf. Überdies verändert sich über den Verschleißweg die Anpresskraft der Messer entsprechend einer jeweiligen Federkennlinie.

Eine elektrische Antriebseinheit mit Mitteln zum Aufbringen einer Azialkraft unter Verwendung magnetischer Axiallager ist aus der US-A-5 573 443 bekannt.

Aufgabe der vorliegenden Erfindung ist es daher, eine Antriebseinheit und einen Granulator anzugeben, mit der bzw. bei dem die oben genannten Nachteile gelöst werden.

Diese Lösung wird mit einer Antriebseinheit gemäß den Merkmalen des Anspruchs 1 bzw. einem Granulator mit entsprechend verbauter Antriebseinheit gemäß den Merkmalen des Anspruchs 14 erreicht.

Demgemäß ist ein wesentlicher Gedanke der Erfindung darin zu sehen, dass die gewünschte Axialkraft zum Andrücken eines Schneidmesser gegen eine Schneidplatte mittels eines magnetischen Axiallagers erreicht wird. Dieses Axiallager umfasst einen ersten Axiallagerteil, der fest in einem Gehäuse der Antriebseinheit angeordnet und einem beweglichen Axiallagerteil, der im Rotor angeordnet ist. Natürlich können auch zwei oder mehrere Axiallager vorgesehen sein. Ein Vorzug des magnetischen Axiallagers ist die berührungslose und damit abnutzungsfreie Wirkungsweise und die im Vergleich zu mechanischen Lösungen relativ einfache Konstruktionsweise.

Eine besonders bevorzugte Ausführungsform der Antriebseinheit ist dadurch gekennzeichnet, dass auch die Radiallager des Rotors als berührungslose Magnetlager ausgebildet sind. In diesem Fall läuft der Rotor absolut berührungsfrei und damit verschleißarm. Dies erhöht die Funktionssicherheit und vermindert Abnutzungserscheinungen.

Die Verwendung von magnetischen Radiallagern ist aus dem Einsatzbereich bei Kreiselpumpen oder magnetgelagerten Spaltrohrpumpen bekannt. In analoger Weise zu magnetgelagerten Spaltrohrpumpen ist der Rotor in einem sogenannten Spaltrohr aufgenommen und mit diesem gegenüber dem Gehäuse abgedichtet. Beim Spaltrohr besteht zwischen Rotor und dem Spaltrohr selbst - beim Betrieb - ein definierter, den Rotor umgebender umlaufender Spalt. Beim Abschalten der Antriebseinheit und dem wirkungslos werden der entsprechenden Magnetanordnungen wird der Rotor dann im Spaltrohr gehalten. Überdies kann im Spaltrohr eine Flüssigkeit angeordnet sein, die als Stabilisierungs-, Pufferungs- und Kompensationsmedium wirkt.

Gemäß einer weiteren besonders bevorzugten Ausführungsform der Antriebseinheit ist eine Steuerung vorgesehen und derart ausgebildet, dass die Axialkraft in gewünschter Weise einstellbar oder einregelbar ist. Insbesondere kann die Steuerung ausgebildet sein, um die Axialkraft - zumindest über definierte Zeiträume - auf einen festgelegten Wert konstant zu halten. Zudem kann die Steuerung ausgebildet sein, um die Axialkraft während des Betriebes zu variieren, also beispielsweise in vordefinierten Intervallen zu erhöhen und dadurch ein Nachschleifen der Messer zu bewirken.

Zum Zweck der Regelung ist es möglich, ein oder mehrere Sensoren vorzusehen, die beispielsweise die Axialkraft oder Position des Messers erfassen und in einen entsprechendes. Signal umwandeln.

Durch die mögliche Abnutzung des Schneidmessers muss auch eine gewisse axiale Bewegungsfreiheit der Rotoranordnung gegeben sein. Diese Axialverschiebung kann im Bereich von 1 bis 8 mm, insbesondere von 3 bis 6 mm liegen. Natürlich kann auf vorgesehen sein, dass das Schneidmesser vor oder nach dem Betrieb des Granulators etwas zurückgesetzt wird. In diesem Fall wäre es erforderlich, die Axialverschiebung sogar noch in einem größeren Bereich bereitzustellen.

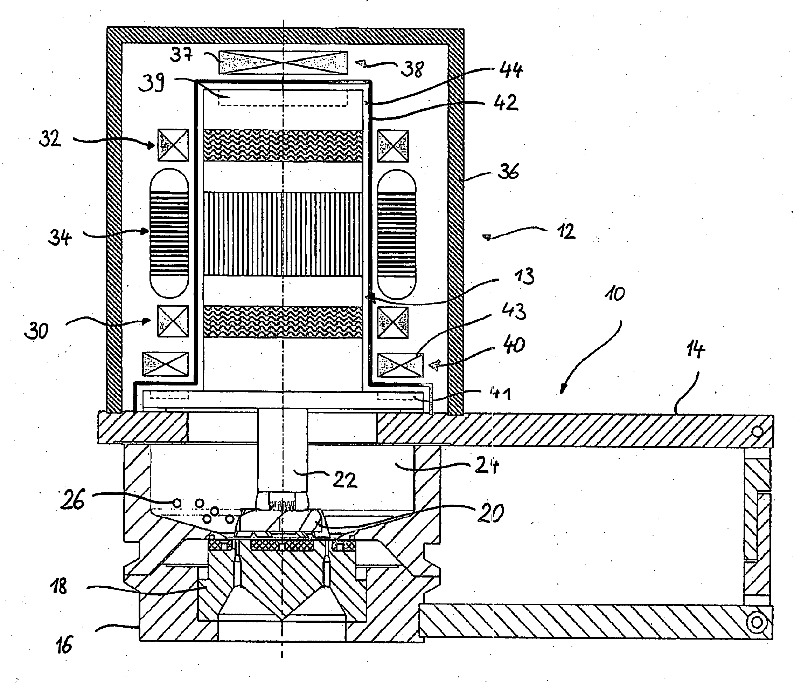

Eine konkrete Ausführungsform der vorliegenden Erfindung wird nachfolgend anhand eines Ausführungsbeispiels in Bezug auf eine einzige Zeichnung näher erläutert. Die einzige Figur zeigt in stark schematisierter Weise einen Unterwassergranulator zusammen mit einer entsprechenden Antriebseinheit.

In der schematischen Schnittdarstellung ist ein Teil eines Unterwassergranulatorsystems dargestellt, wobei der Extruder nicht in seiner Gesamtheit, sondern nur noch dessen ausgangsseitiges Ende (Bezugszeichen 16) dargestellt ist. An den Extruder schließt sich eine Schneidplatte 18 an, in der Kanäle in bekannter Weise einen Durchtritt vom Zylinderinnenraum des Extruders aus der Schneidplatte heraus gewähren. An der Schneidplatte liegt ein Messerkopf 20 mindestens eines Schneidmessers an, welches bei Rotation die aus den Kanälen der Schneidplatte austretenden Kunststoffstränge kontinuierlich abschneidet. Diese Kunststoffstränge bilden dann in dem Schneidraum 24 das nur schematisch dargestellte Granulat 26.

Bei dem Unterwassergranulator wird Kühlwasser, welches auch als Transportmittel dient, in den Schneidraum 24 eingebracht. Die dazu notwendigen Leitungen sind vorliegend nicht näher dargestellt. Mit dem Kühlwasser wird das Granulat sowie die Schneidvorrichtung gekühlt und das Granulat sodann aus dem Schneidraum 24 abgeführt. Der Messerkopf 20 ist an einer Messerwelle 22 angeordnet, die in einen Rotor 13 mündet. Der Rotor ist zentraler Bestandteil der Antriebseinheit 12, welche in einem Gehäuse 36 ausgenommen ist.

Das Gehäuse 36 ist an einem Tragrahmen 14 angeordnet und von diesem gehalten. Der Tragrahmen kann in der vorliegenden Ausführungsform (nicht näher dargestellt) teilweise weggeschwenkt werden, wodurch sich die Antriebseinheit 12 samt Schneidmesser von der Schneidplatte 18 wegbewegen, insbesondere wegklappen lässt.

Die Antriebseinheit 12 umfasst einen Elektromotor 34 mit einem fest im Gehäuse angeordneten Stator und einem in den Rotor integrierten Elektromotorrotor. Beim vorliegenden Ausführungsbeispiel ist der Elektromotor 34 im wesentlichen zentral in der Antriebseinheit vorgesehen. In Axialrichtung des Rotors 13 beidseitig des Elektromotors sind zwei als berührungslose Magnetlagerungen ausgeführte Radiallager 30 und 32 angeordnet. Jedes Radiallager umfasst ein im Gehäuse fest angeordnetes elektromagnetisch wirksames, ringförmiges Radiallagerteil und ein in dem Rotor 13 integrierten, mit dem gehäuseseitigen Radiallagerteil zusammenwirkenden Rotor-Radiallagerteil. Die Technik der berührungslosen Magnetlagerung ist bereits bei Spaltrohrpumpen zum Einsatz gekommen und es wird diesbezüglich darauf verwiesen.

Zusätzlich zum Elektromotor 34 und den beiden als magnetische Radiallager ausgeführten Lagern 30 und 32 sind zwei berührungslos arbeitende Axiallager 40 und 38 vorgesehen. Das Axiallager 40 umfasst ein ringförmiges, elektromagnetisch wirkendes erstes Lagerteil, das mit einem in Axialrichtung beabstandeten und in dem Rotor 13 integrierten Lagerelement derart zusammenwirkt, dass eine Axialkraft auf den Rotor 13 in Richtung der Schneidplatte 18 ausgeübt werden kann.

In gleicher Weise wirkt das Axiallager 38. Hier ist ein elektromagnetisch wirksames, scheibenförmiges erstes Lagerteil 37 fest im Gehäuse fest aufgenommen, welches mit dem im Rotor 13 aufgenommen zweiten Lagerteil 39 zusammenwirkt und ebenfalls zum Aufbringen einer Axialkraft auf den Rotor 13 in Richtung des Schneidmessers 18 dient. Durch entsprechende elektrische Beaufschlagung der beiden Lagerelemente 43 und 37 kann die Kraft in Axialrichtung unterschiedlich eingestellt werden.

Der Rotor 13 ist in einem Spaltrohr 42 angeordnet, das im wesentlichen die gleiche Form wie der Rotor besitzt, diesen umgibt und ebenfalls am Tragrahmen 14 befestigt ist.

Aufgrund der im wesentlichen gleichen Formgebung von Rotor 13 und Spaltrohr 42 bildet sich beim Betrieb des Antriebs zwischen dem Rotor 13 und dem Spaltrohr 42 ein im wesentlichen definierter Spalt aus, der in der Zeichnung auch zu erkennen ist. In diesem Raum kann auch eine Flüssigkeit zur Dämpfung von Laufunruhen vorgesehen sein.

Die gesamte Anordnung ist vorliegend derart aufgebaut, dass eine Axialverschiebung des Rotors 13 samt Messerwelle 22 und Messerkopf 20 um etwa 4-6 mm möglich ist.

Zudem ist bei der vorliegenden Ereindung (in der Zeichnung nicht dargestellt) eine Steuereinheit vorgesehen, die mit Elektromotor und Axiallagern 40 und 38 verbunden ist und deren Betrieb steuert bzw. regelt. Die Steuereinrichtung kann von ebenfalls nicht dargestellten Sensoren Informationen, beispielsweise über die Anpresskraft des Messerkopfes 20 an die Schneidplatte 18 oder die Axialposition des Rotors erhalten und mit diesen Informationen eine Regelung durchführen.

Die Wirkungsweise der vorliegenden Ausführungsform wird im folgenden näher erläutert:
Vor Betrieb des vorliegenden Unterwassergranulators ist die Antriebseinheit 12 möglicherweise weggeklappt. Zum Betrieb wird die Antriebseinheit zusammen mit dem Schneidmesser 22 zugeklappt und verschlossen. Dabei kommt der Schneidmesserkopf 20 in lose Anlage zur Schneidplatte 18.

Beim Starten des Unterwassergranulators wird zum einen der nicht näher dargestellte Extruder in Betrieb gesetzt. Im Extruder wird Kunststoff aufgeschmolzen und durch die in der Schneidplatte 18 angeordneten Kanäle ausgedrückt.

Parallel wird die Antriebseinheit 12 betrieben, dabei werden die Radiallager 30 und 32 aktiviert und der Elektromotor 34 wird gestartet. Durch die Rotation des Rotors, der zunächst im Spaltrohr 12 an diesem an einer Stelle anliegt, wird der Rotor in eine Drehbewegung versetzt und in der Drehbewegung durch die Radiallager 30 und 32 im wesentlichen zentriert und berührungslos gehalten und gelagert Gleichzeitig werden die Axiallager 38 und 40 aktiviert, wodurch der Rotor 13 in Axialrichtung in der Figur nach unten beaufschlagt wird, so dass der Messerkopf 20 der Schneidmesser in Kraftanlage an die Schneidplatte 18 kommt. Durch das rotierende Schneidmesser werden die aus den Kanälen der Schneidplatte austretenden Kunststoffstränge in Granulatform geschnitten.

Beim Anfahren der Antriebseinheit wird zunächst eine erhöhte Axialkraft gewählt, um ein ordnungsgemäßes Abschneiden der ersten austretenden Kunststoffstrangbereiche zu erreichen. Im Verlauf des Betriebes wird die Axialkraft dann auf einen normalen Regelbetrieb mit kleinerer Anpresskraft zurückgefahren, die zur ordnungsgemäßen Abschneidung der Kunststoffstränge ausreichend ist.

Unabhängig von einer evtl. Abnutzung der Messer des Messerkopfes 20 kann die Axialkraft durch entsprechende Beaufschlagung der Axiallager 38 und 40 konstant gehalten werden. In bestimmten Zeitintervallen wird die, Axialkraft auf einen vorbestimmten Wert erhöht, um die Messer des Messerkopfes 20 wieder zu schärfen. Dabei sollte die Axialkraft zumindest in einem Bereich einstellbar sein der Flächenpressungen zwischen 0 und 1N/mm² auf den Schneidflächen erzeugt. Auch höhere Maximalkräfte sind oftmals wünschenswert. Das Spiel der Messerwelle, die über den Rotor an zwei Punkten über die Magnetlager radial gelagert ist, entspricht im wesentlichen dem Spiel der üblichen Wälzlagerungen. ,

Insgesamt ist mit der vorliegenden Ausführungsform der Antriebseinheit sowie des Granulators eine Anordnung erreicht die - bis auf die Schneidmesseranordnung - abnutzungsfrei arbeitet. Zu dem lässt sich die Axialkraft jeweils in gewünschter Weise variieren und einstellen, ohne dass komplizierte, mechanische Vorrichtungen erforderlich sind.

### Bezugszeichenliste

- 10: Unterwassergranulator
- 12: Antriebseinheit
- 13: Rotor
- 14: Tragerahmen
- 16: Extruderausgang
- 18: Schneidplatte
- 20: Messerkopf
- 22: Messerwelle
- 24: Schneidraum
- 26: Granulate
- 30: Vorderes magnetisches Radiallager
- 32: Hinteres magnetisches Radiallager
- 34: Elektromotor
- 36: Gehäuse für Antriebseinheit
- 37: Fester Axiallagerteil
- 38: Hinteres magnetisches Axiallager
- 39: Magnetscheibe
- 40: Vorderes magnetisches Axiallager
- 41: Magnetring
- 42: Spaltrohr
- 43: Fester Axiallagerteil
- 44: Spalt

## Patentansprüche

1. Antriebseinheit für einen Granulator, insbesondere einen Unterwassergranulator, mit einem Rotor (13) der mit einem Schneidmesser (20, 22) des Granulators verbunden oder verbindbar ist wobei ein Elektromotor (34) zum Antreiben des Rotors (13) und Radiallager (30, 32) zum Lagern des Rotors (13) in einem Gehäuse (36) vorgesehen sind, sowie mit einer Vorrichtung zum Aufbringen einer Axialkraft (38, 40), um beim Betrieb das Schneidmesser (20) gegen eine Schneidplaltte (18) anzudrücken,
wobei die Vorrichtung zum Aufbringen der Axialkraft zumindest ein magnetisches Axiallager (38, 40) umfasst, wobei ein in dem Gehäuse (36) der Antriebseinheit fest angeordneter erster Axiallagerteil (37, 43) mit einem im Rotor (13) angeordneten beweglichen Axiallagerteil (39, 41) zusammenwirkt, **dadurch gekennzeichnet, dass** der Rotor (13) in einem Spalbohr (42) aufgenommen und durch dieses gegenüber dem Gehäuse (36) abgedichtet ist.

2. Antriebseinheit nach Anspruch 1,
**dadurch gekennzeichnet,**
**dass** zumindest zwei magnetische Axiallager (38, 40) vorgesehen sind, die axial versetzt zueinander im Bereich des Rotors (13) angeordnet sind.

3. Antriebseinheit nach einem der Ansprüche 1 oder 2,
**dadurch gekennzeichnet,**
**dass** die Radiallager als berührungslose Magnetlager (30, 32) ausgebildet sind, mit einem im Gehäuse (36) fest angeordneten ersten Radiallagerteil und einem im Rotor (13) angeordneten beweglichen Radiallagerteil.

4. Antriebseinheit nach einem der Ansprüche 1 bis 3,
**dadurch gekennzeichnet,**
**dass** der Elektromotor (34) in Axialrichtung gesehen zwischen zwei magnetischen Radiallagern (30, 32) angeordnet ist und die zwei magnetischen Radiallager zwischen zwei magnetischen Axiallagern (38, 40) angeordnet sind.

5. Antriebseinheit nach einem der vorhergehenden Ansprüche,
**dadurch gekennzeichnet,**
**dass** der Raum (44) zwischen dem Spaltrohr (42) und dem Rotor (13) mit einer Flüssigkeit gefüllt ist.

6. Antriebseinheit nach einem der vorhergehenden Ansprüche,
**dadurch gekennzeichnet,**
**dass** eine elektrische Steuerung oder Regelung vorgesehen und derart ausgebildet ist, dass die Axialkraft in gewünschter Weise einstellbar oder einregelbar ist.

7. Antriebseinheit nach Anspruch 6,
**dadurch gekennzeichnet,**
**dass** die Steuerung derart ausgebildet ist, um die Axialkraft zumindest über definierte Zeiträume auf einem konstanten Wert zu halten.

8. Antriebseinheit nach Anspruch 6 oder 7,
**dadurch gekennzeichnet,**
**dass** die Steuerung derart ausgebildet ist, um während des Betriebes der Antriebseinheit variiert zu werden.

9. Antriebseinheit nach Anspruch 8,
**dadurch gekennzeichnet,**
**dass** eine Intervallsteuerung vorgesehen ist, die in vorgewählten zeitlichen Abständen eine Erhöhung der Axialkraft bewirkt.

10. Antriebseinheit nach einem der vorhergehenden Ansprüche,
**dadurch gekennzeichnet,**
**dass** zumindest ein Sensor vorgesehen ist, der die Kraft oder die Position der Messerwelle erfasst und in ein entsprechendes Signal umwandelt.

11. Antriebseinheit nach einem der vorhergehenden Ansprüche,
**dadurch gekennzeichnet,**
**dass** der Elektromotor (34), die Radiallager (30, 32) und die Axiallager (38, 40) in einer Weise ausgebildet sind, um eine Axialverschiebung des Schneidmessers (20) in einem bestimmten Längenbereich zuzulassen.

12. Antriebseinheit nach Anspruch 11,
**dadurch gekennzeichnet,**
**dass** die Axialverschiebung in einem Bereich von 1 bis 8 mm, insbesondere 3 bis 6 mm liegt.

13. Granulator umfassend einen Extruder, eine Schneidplatte (18), ein Schneidmesser (20) und eine mit dem Schneidmesser verbundene Antriebseinheit (12),
**dadurch gekennzeichnet,**
**dass** die Antriebseinheit nach einem der Ansprüche 1 bis 12 ausgebildet ist.

## Claims

1. A drive unit for a granulator, in particular an underwater granulator, with a rotor (13) which is, or can be, connected to a cutting blade (20, 22) of the granulator, with an electric motor (34) for driving the rotor (13) and radial bearings (30, 32) for supporting the rotor (13) being provided in a housing (36), and with a device for applying an axial force (38, 40), in order to press the cutting blade (20) against a cutting plate (18) during operation, with the device for applying the axial force comprising at least one magnetic axial bearing (38, 40), with a first axial bearing part (37, 43), which is fixedly arranged in the housing (36) of the drive unit, cooperating with a movable axial bearing part (39, 41) which is arranged in the rotor (13),
**characterized in that**
the rotor (13) is held in a gap tube (42) and is sealed by the latter with respect to the housing (36).

2. The drive unit according to Claim 1,
**characterized in that**
at least two magnetic axial bearings (38, 40) are provided, which are arranged staggered axially with respect to each other in the region of the rotor (13).

3. The drive unit according to any of Claims 1 or 2,
**characterized in that**
the radial bearings are constructed as non-contact magnetic bearings (30, 32), with a first radial bearing part fixedly arranged in the housing (36) and with a movable radial bearing part arranged in the rotor (13) .

4. The drive unit according to any of Claims 1 to 3,
**characterized in that**
the electric motor (34), viewed in the axial direction, is arranged between two magnetic radial bearings (30, 32), and the two magnetic radial bearings are arranged between two magnetic axial bearings (38, 40).

5. The drive unit according to any of the preceding claims,
**characterized in that**
the space (44) between the gap tube (42) and the rotor (13) is filled with a liquid.

6. The drive unit according to any of the preceding claims,
**characterized in that**
an electric control or regulator is provided and constructed such that the axial force is able to be adjusted or regulated in a desired manner.

7. The drive unit according to Claim 6,
**characterized in that**
the control is constructed in order to maintain the axial force at a constant value at least over defined periods of time.

8. The drive unit according to Claim 6 or 7,
**characterized in that**
the control is constructed in order to be varied during the operation of the drive unit.

9. The drive unit according to Claim 8,
**characterized in that**
an interval control is provided, which brings about an increase to the axial force in preselected time intervals.

10. The drive unit according to any of the preceding claims,
**characterized in that**
at least one sensor is provided, which detects the force or the position of the blade shaft and converts it into a corresponding signal.

11. The drive unit according to any of the preceding claims,
**characterized in that**
the electric motor (34) , the radial bearings (30, 32) and the axial bearings (38, 40) are constructed in a manner in order to permit an axial displacement of the cutting blade (20) in a defined length range.

12. The drive unit according to Claim 11,
**characterized in that**
the axial displacement lies in a range of 1 to 8 mm, in particular 3 to 6 mm.

13. A granulator comprising an extruder, a cutting plate (18), a cutting blade (20) and a drive unit (12) which is connected with the cutting blade,
**characterized in that**
the drive unit is constructed according to any of Claims 1 to 12.

## Revendications

1. Unité d'entraînement pour un granulateur, notamment pour un granulateur sous-marin, avec un rotor (13) qui est relié ou susceptible d'être relié avec une lame (20, 22) du granulateur, un moteur électrique (34) pour entraîner le rotor (13) et des paliers radiaux (30, 32) pour le logement du rotor (13) étant prévus dans un carter (36), ainsi qu'avec un dispositif pour appliquer une force axiale (38, 40), pour presser en fonctionnement la lame (20) contre une matrice de découpage (18),
le dispositif pour appliquer la force axiale comprenant au moins un palier magnétique axial (38, 40), un premier élément de palier axial (37, 43) fixement disposé dans le carter (36) de l'unité d'entraînement interagissant avec un élément de palier mobile (39, 41) disposé dans le rotor (13), **caractérisée en ce que** le rotor (13) est logé dans un tube fendu (42) et **en ce que** ce dernier est rendu étanche par rapport au carter (36) .

2. Unité d'entraînement selon la revendication 1,
**caractérisée en ce que**,
au moins deux paliers magnétiques axiaux (38, 40) qui sont disposés en étant déportés l'un par rapport à l'autre en direction axiale dans la région du rotor (13) sont prévus.

3. Unité d'entraînement selon l'une quelconque des revendications 1 ou 2,
**caractérisée en ce que**,
les paliers radiaux sont réalisés sous la forme de paliers magnétiques sans contact (30, 32), avec un premier élément de palier radial fixement disposé dans le carter (36) et avec un élément de palier radial mobile, disposé dans le rotor (13).

4. Unité d'entraînement selon l'une quelconque des revendications 1 à 3,
**caractérisée en ce que**,
vu en direction axiale, le moteur électrique (34) est disposé entre deux paliers magnétiques radiaux (30, 32) et **en ce que** les deux paliers magnétiques radiaux sont disposés entre deux paliers magnétiques axiaux (38, 40).

5. Unité d'entraînement selon l'une quelconque des revendications précédentes,
**caractérisée en ce que**,
l'espace (44) entre le tube fendu (42) et le rotor (13) est rempli d'un liquide.

6. Unité d'entraînement selon l'une quelconque des revendications précédentes,
**caractérisé en ce que**,
une commande ou régulation électrique est prévue et réalisée de sorte que la force axiale soit réglable ou ajustable de la manière souhaitée.

7. Unité d'entraînement selon la revendication 6,
**caractérisée en ce que**,
la commande est réalisée de sorte à maintenir la force axiale à une valeur constante au moins sur des périodes définies.

8. Unité d'entraînement selon la revendication 6 ou 7,
**caractérisée en ce que**,
la commande est réalisée de sorte à être variée pendant le fonctionnement de l'unité d'entraînement.

9. Unité d'entraînement selon la revendication 8,
**caractérisée en ce que**,
il est prévu une commande par intervalles, qui dans des écarts temporels présélectionnés provoque une augmentation de la force axiale.

10. Unité d'entraînement selon l'une quelconque des revendications précédentes,
**caractérisée en ce que**,
il est prévu au moins un capteur, qui détecte la position de l'arbre porte-lame et qui la transforme en un signal correspondant.

11. Unité d'entraînement selon l'une quelconque des revendications précédentes,
**caractérisée en ce que**,
le moteur électrique (34), les paliers radiaux (30, 32) et les paliers axiaux (38, 40) sont réalisés de sorte à admettre un déplacement axial de la lame (20) dans une plage de longueur définie.

12. Unité d'entraînement selon la revendication 11,
**caractérisée en ce que**,
le déplacement axial se situe dans une plage de 1 à 8 mm, notamment de 3 à 6 mm.

13. Granulateur comprenant une extrudeuse, une matrice de découpage (18), une lame (20) et une unité d'entraînement (12) reliée à la lame,
**caractérisée en ce que**,
l'unité d'entraînement est réalisée selon l'une quelconque des revendications 1 à 12.
